# EUROPÄISCHE PATENTSCHRIFT

(11) **EP 3 710 691 B1**
(45) Veröffentlichungstag und Bekanntmachung des Hinweises auf die Patenterteilung: **23.03.2022**
(21) Anmeldenummer: 18800894.0
(22) Anmeldetag: 07.11.2018
(51) Int. Cl.: F03D 1/06

(54) **VERBINDUNG EINES ROTORBLATTS MIT DER ROTORNABE EINER WINDENERGIEANLAGE**
ATTACHMENT OF A ROTORBLADE WITH THE HUB OF A WIND TURBINE
ATTACHEMENT D'UNE PALE D'ÉOLIENNE AVEC LE MOYEU D'UNE ÉOLIENNE

(30) Priorität: 16.11.2017 DE 102017126970; 24.05.2018 DE 102018112464
(43) Veröffentlichungstag der Anmeldung: 23.09.2020
(73) Patentinhaber: Wobben Properties GmbH, 26607 Aurich (DE)
(72) Erfinder: HESSE, Ingo, 26632 Ihlow (DE); HOFFMANN, Alexander, 26721 Emden (DE)
(74) Vertreter: Eisenführ Speiser
(86) Internationale Anmeldenummer: PCT/EP2018/080473
(87) Internationale Veröffentlichungsnummer: WO 2019/096653

(56) Entgegenhaltungen:
- EP-A1- 2 372 146
- EP-A1- 2 623 769
- EP-A1- 2 679 816
- WO-A1-2013/071936
- WO-A2-2010/017820
- DE-A1-102016 203 269
- US-A1- 2014 377 069

## Beschreibung

Die Erfindung betrifft ein Rotorblatt für eine Windenergieanlage, einen Rotor für eine Windenergieanlage, eine Windenergieanlage, ein Verfahren zur Herstellung eines Rotorblatts, ein Verfahren zur Verbindung eines Rotorblatts mit einer Rotornabe und ein Verfahren zur Reparatur eines Rotors einer Windenergieanlage.

Zu Befestigung von Rotorblättern an der Rotorblattnabe von Windenergieanlagen oder auch zur Befestigung von Rotorblattsegmenten aneinander existieren verschiedene Lösungen, wie beispielsweise beschrieben in DE 10 2016 203 269, WO 2013/083451 A1, DE 197 33 372, DE 103 24 166, DE 199 62 989, DE 10 2006 022 279, DE 10 2011 088 025, DE 10 2014 206 670, DE 10 2015 120 113, DE 10 2016 110 551, DE 102 01 726, DE 10 2014 205 195 oder DE 10 2014 220 249.

An die Verbindungen werden hohe Anforderungen an die Zuverlässigkeit gestellt, während gleichzeitig eine einfache und kostengünstige Herstellung und Montage gewünscht ist.

Das Deutsche Patent- und Markenamt hat in der Prioritätsanmeldung zur vorliegenden Anmeldung folgenden weiteren Stand der Technik recherchiert: DE 10 2015 212 906 A1, DE 10 2014 018 280 A1, DE 10 2011 050 966 A1, DE 10 2015 007 977 A1.

Es ist daher eine Aufgabe der vorliegenden Erfindung, ein Rotorblatt für eine Windenergieanlage, einen Rotor für eine Windenergieanlage, eine Windenergieanlage, ein Verfahren zur Herstellung eines Rotorblatts, ein Verfahren zur Verbindung eines Rotorblatts mit einer Rotornabe und ein Verfahren zur Reparatur eines Rotors einer Windenergieanlage bereitzustellen, welche gegenüber existierenden Lösungen verbessert sind. Insbesondere ist es eine Aufgabe der vorliegenden Erfindung, ein Rotorblatt für eine Windenergieanlage, einen Rotor für eine Windenergieanlage, eine Windenergieanlage, ein Verfahren zur Herstellung eines Rotorblatts, ein Verfahren zur Verbindung eines Rotorblatts mit einer Rotornabe und ein Verfahren zur Reparatur eines Rotors einer Windenergieanlage bereitzustellen, welche kostensparend und/oder vereinfacht und/oder besonders effizient und/oder zuverlässig sind.

Diese Aufgabe wird erfindungsgemäß gelöst durch ein Rotorblatt für eine Windenergieanlage, mit einer Anschlussschnittstelle, wobei die Anschlussschnittstelle mindestens eine Ausnehmung aufweist zur Aufnahme eines Zugelements zum Anschluss des Rotorblatts an ein weiteres Element einer Windenergieanlage, wobei eine Außenumfangsfläche der Ausnehmung von einem Rotorblattmaterial gebildet ist und ein Innengewinde aufweist, wobei das Zugelement mit Klebstoff in die Ausnehmung eingebracht ist.

Die Erfindung beruht unter anderem auf der Erkenntnis, dass beispielsweise existierende Querbolzenverbindungen zwar in der Regel robust und zuverlässig sowie einfach herzustellen sind. Gerade das bei diesen Verbindungen entstehende zusätzliche Gewicht und der für die Verbindung benötigte Raum sind jedoch oft limitierende Faktoren. Ferner beruht die Erfindung auf der Erkenntnis, dass auch existierende Rotorblattverbindungen mit eingeklebten Gewindehülsen insbesondere mit hohen Kosten verbunden sind und nur sehr schwierig nachträglich ausgetauscht werden können.

Die hier beschriebene Lösung hingegen ermöglicht eine ausgesprochen leichte und platzsparende Verbindung, da durch Ausbildung der Ausnehmung direkt im Rotorblattmaterial der Anschlussschnittstelle kein zusätzlicher Raum und kein zusätzliches Material für Gewindehülsen oder ähnliches erforderlich ist. Auf diese Weise kann die Anzahl an Ausnehmungen und Zugelementen für eine gegebene Rotorblattgeometrie, insbesondere eine gegebene Anschlussgeometrie gegenüber existierenden Lösungen deutlich erhöht werden. Ferner führt die hier beschriebene Lösung zu Kosteneinsparungen, da die Herstellung schneller und einfacher ist und auch weniger Bauteile (etwa keine separaten, einzuklebenden Hülsen) benötigt.

Die hier beschriebene Lösung ermöglicht in vorteilhafter Weise auch eine Reparatur der Verbindung. Die Ausnehmungen können bei Bedarf im Durchmesser vergrößert werden, beispielsweise durch Aufbohren und neues Gewindeschneiden und/oder Einbringen eines Gewindeeinsatzes. Auf diese Weise kann erneut ein Zugelement (ggf. mit ebenfalls entsprechend größerem Durchmesser oder, insbesondere bei Verwendung eines Gewindeeinsatzes auch kleinerem oder gleichem Durchmesser) in die vergrößerte Ausnehmung eingebracht werden.

Das Zugelement wird vorzugsweise mit Klebstoff in die Ausnehmung eingebracht. Der Klebstoff kann vor und/oder mit und/oder nach dem Zugelement in die Ausnehmung eingebracht werden. Vorzugsweise kann ein Befüllweg, z.B. in Form einer Bohrung, oder mehrere Befüllwege vorgesehen sein, um auch nach dem Einbringen des Zugelements in die Ausnehmung den Klebstoff einbringen zu können.

Die Anschlussschnittstelle liegt vorzugsweise in einer Ebene, zu der eine Rotorblattlängsachse im Wesentlichen orthogonal ist. Die Anschlussschnittstelle kann vorzugsweise ringförmig ausgebildet sein und/oder eine ringförmige Stirnfläche aufweisen.

In der vorliegenden Anmeldung wird unter einem Rotorblatt insbesondere auch ein Rotorblattsegment verstanden, das mit einem weiteren Rotorblattsegment zu einem Rotorblatt verbunden werden kann. Ein Rotorblatt erstreckt sich in der Regel mit seiner Haupterstreckungsrichtung entlang einer Längsachse von einer Rotorblattwurzel zu einer Rotorblattspitze. Ein zwei zusammengesetzte Rotorblattsegmente umfassendes Rotorblatt kann auch als zusammengesetztes Rotorblatt bezeichnet werden.

Die Ausnehmungen dienen insbesondere zum Anschluss des Rotorblatts an ein weiteres Element einer Windenergieanlage, wie beispielsweise eine Rotorblattnabe und/oder einen Rotorblattadapter und/oder ein (weiteres) Rotorblattsegment. In einer vorteilhaften Ausgestaltung weist auch das weitere Element der Windenergieanlage, wie beispielsweise eine Rotorblattnabe und/oder einen Rotorblattadapter und/oder ein (weiteres) Rotorblattsegment, ebenfalls eine Anschlussschnittstelle auf, wobei die Anschlussschnittstelle mindestens eine Ausnehmung aufweist zur Aufnahme eines Zugelements zum Anschluss des weiteren Elements an das Rotorblatt, wobei eine Außenumfangsfläche der Ausnehmung von einem Anschlussmaterial gebildet ist und ein Innengewinde aufweist.

Dies ist insbesondere bevorzugt für den Anschluss von zwei Rotorblattsegmenten aneinander.

Vorzugsweise sind die jeweiligen Ausnehmungen des Rotorblatts und des weiteren Elements der Windenergieanlage zueinander versetzt angeordnet. Auf diese Weise können Zugelemente abwechselnd im Rotorblatt und im weiteren Element aufgenommen werden. Ferner vorzugsweise weist das Rotorblatt eine Zugelementverankerung auf, die angeordnet ist, um ein in einer Ausnehmung des weiteren Elements aufgenommenes Zugelement in dem Rotorblatt zu verankern. Ferner vorzugsweise weist das weitere Element eine Zugelementverankerung auf, die angeordnet ist, um ein in einer Ausnehmung des Rotorblatts aufgenommenes Zugelement in dem weiteren Element zu verankern. Die Zugelementverankerung kann Öffnung und/oder ein Verankerungselement, beispielsweise einen D-Bolzen, umfassen.

In vorteilhafter Weise kann in einem Ausführungsbeispiel ein zusammengesetztes Rotorblatt gebildet werden, das ein erstes Rotorblattsegment umfasst, welches als hier beschriebenes Rotorblatt ausgebildet ist, und ein zweites Rotorblattsegment umfasst, welches als hier beschriebenes Rotorblatt ausgebildet ist, wobei ein erstes Zugelement in der Ausnehmung des ersten Rotorblattsegments aufgenommen und in der Zugverankerung des zweiten Rotorblattsegments verankert ist, und wobei ein zweites Zugelement in der Ausnehmung des zweiten Rotorblattsegments aufgenommen und in der Zugverankerung des ersten Rotorblattsegments verankert ist. Vorzugsweise weisen beide Rotorblattsegmente jeweils eine Anschlussschnittstelle mit einer Vielzahl von Ausnehmungen auf, die vorzugsweise alternierend mit einer Vielzahl von Zugelementverankerungen angeordnet sind. Die Vielzahl von Ausnehmungen und/oder die Vielzahl von Zugelementverankerungen kann ringförming angeordnet sein, beispielsweise in Form eines Rings oder in Form von zwei oder mehr Ringen, die vorzugsweise konzentrisch angeordnet sind. Vorteile eines ein zusammengesetzten Rotorblatts sind insbesondere eine leichte und schlanke Verbindung von zwei Rotorblattsegmenten, welche eine Anordnung einer Vielzahl von Zugelementen auf engem Raum ermöglicht.

Die Ausnehmung ist vorzugsweise im Wesentlichen zylinderförmig ausgebildet. Ferner vorzugsweise weist die Ausnehmung einen im Wesentlichen zylinderförmigen Schaftteil mit einem ersten Durchmesser auf und einen an die Öffnung angrenzenden erweiterten Kopfteil auf mit einem zweiten Durchmesser auf, wobei der zweite Durchmesser größer ist als der erste Durchmesser. In Längsrichtung der Ausnehmung ist der Schaftteil vorzugsweise länger als der Kopfteil, insbesondere um ein Vielfaches länger als der Kopfteil.

Vorzugsweise ist eine Längsachse der Ausnehmung im Wesentlichen parallel zu einer Längsachse des Rotorblatts.

Das in der Ausnehmung aufgenommene Zugelement weist vorzugsweise ein Außengewinde auf, wobei das Innengewinde der Ausnehmung und das Außengewinde des Zugelements vorzugsweise für einen Eingriff miteinander ausgebildet sind.

Das in der Ausnehmung aufgenommene Zugelement kann mit seinem aus der Ausnehmung herausragenden Ende beispielsweise in einem Querbolzen eines weiteren Elements der Windenergieanlage (wie eine Rotornabe, ein Rotorblattadapter oder ein (weiteres) Rotorblattsegment) aufgenommen werden zur Befestigung des Rotorblatts. Auch andere Befestigungsarten sind möglich.

Gemäß einer bevorzugten Ausführungsform ist vorgesehen, dass die Ausnehmung als Sackloch ausgebildet ist. Die Öffnung des Sacklochs liegt vorzugsweise in einer Stirnfläche der Anschlussschnittstelle. Eine Längserstreckung der Ausnehmung entlang der Längsachse ist vorzugsweise länger als die Länge des darin aufzunehmenden Teils des Zugelements.

Es ist ferner bevorzugt, dass die Ausnehmung erhalten ist durch Bohren und Einbringen eines Innengewindes. Insbesondere ist es bevorzugt, dass die Ausnehmung erhalten ist durch Bohren und, vorzugsweise anschließendes, Einbringen eines Innengewindes.

In einer weiteren bevorzugten Ausführungsform ist vorgesehen, dass die Ausnehmung eine Tiefe aufweist, die einem mindestens einem Vielfachen des Durchmessers der Ausnehmung entspricht. Die Tiefe entspricht vorzugsweise einer Erstreckung entlang der Längsachse der Ausnehmung.

Eine weitere bevorzugte Fortbildung zeichnet sich dadurch aus, dass die Ausnehmung eine Tiefe aufweist, die mindestens dem Dreifachen, vorzugsweise mindestens dem Sechsfachen des Durchmessers der Ausnehmung entspricht. Vorzugsweise weist die Ausnehmung eine Tiefe auf, die maximal dem Zwölffachen des Durchmessers der Ausnehmung entspricht.

Ferner ist bevorzugt, dass ein Durchmesser der Ausnehmung etwa einem Drittel, vorzugsweise ca. 10 bis 50%, insbesondere 20 bis 40%, der Ausdehnung der Anschlussschnittstelle orthogonal zur Längsachse entspricht.

Eine bevorzugte Weiterbildung zeichnet sich dadurch aus, dass das Rotorblatt ein Rotorblattmaterial aufweist oder im Wesentlichen aus einem Rotorblattmaterial besteht. Es ist ferner bevorzugt, dass die Anschlussschnittstelle ein Anschlussmaterial aufweist oder im Wesentlichen aus einem Anschlussmaterial besteht. In einer bevorzugten Ausführungsform ist vorgesehen, dass das Rotorblattmaterial und das Anschlussmaterial identisch sind. Das Anschlussmaterial kann gegenüber dem Rotorblattmaterial verstärkt sein.

Die Anschlussschnittstelle und/oder andere Teile des Rotorblatt können beispielsweise auch eine Verstärkung umfassen, die vorzugsweise ebenfalls ganz oder überwiegend aus Anschlussmaterial und/oder Rotorblattmaterial besteht.

Vorzugsweise ist die Anschlussschnittstelle integral mit dem Rotorblatt gefertigt und/oder einstückig mit dem Rotorblatt ausgebildet.

Dabei ist insbesondere bevorzugt, dass das Rotorblattmaterial ein faserverstärktes Verbundmaterial ist, insbesondere Faser-Kunststoff-Verbundmaterial, vorzugsweise ein glasfaserverstärktes Epoxidharz-Verbundmaterial. Ferner ist bevorzugt, dass das Anschlussmaterial ein faserverstärktes Verbundmaterial ist, insbesondere Faser-Kunststoff-Verbundmaterial, vorzugsweise ein glasfaserverstärktes Epoxidharz-Verbundmaterial.

Als Fasermaterialien können vorzugsweise organische Fasern, und/oder anorganische Fasern, und/oder Naturfasern zum Einsatz kommen.

Anorganische Fasern sind beispielsweise Glasfasern, Basaltfasern, Borfasern, Keramikfasern oder Stahlfasern. Organische Fasern sind beispielsweise Aramidfasern, Kohlenstofffasern, Polyesterfasern und Polyethylenfasern (insbesondere High Performance Polyethylene (HPPE) Fasern, wie beispielsweise Dyneema-Fasern). Naturfasern sind beispielsweise Hanffasern, Flachsfasern oder Sisalfasern.

Vorzugsweise umfasst das Matrixmaterial des faserverstärkten Verbundmaterials einen Kunststoff umfasst oder besteht daraus. Der Kunststoff umfasst vorzugsweise ein Thermoplast und/oder ein Duroplast oder besteht daraus. Besonders bevorzugt sind beispielsweise duroplastische Kunststoffe, wie Polyesterharz (UP) und/oder Epoxidharz, und/oder thermoplatische Kunststoffe, wie Polyamid. Das Matrix Matrixmaterial des faserverstärkten Verbundmaterials kann Zement und/oder Beton und/oder Metall und/oder Keramik und/oder Kohlenstoff umfassen oder daraus bestehen.

In einer weiteren bevorzugten Ausführungsform ist vorgesehen, dass das Rotorblattmaterial und/oder das Anschlussmaterial eine Steifigkeit aufweist, die geringer ist, insbesondere um ein Vielfaches geringer ist, vorzugsweise um mindestens das Fünffache geringer ist, beispielsweise um mindestens das Siebenfache geringer ist, als die Steifigkeit eines Materials des Zugelements, wobei als Maß der Steifigkeit insbesondere der Elastizitätsmodul und/oder der Schubmodul des jeweiligen Materials dient.

Das Zugelement weist vorzugsweise Stahl auf oder besteht ganz oder überwiegend aus Stahl.

Eine weitere bevorzugte Fortbildung zeichnet sich dadurch aus, dass die Anschlussschnittstelle eine Vielzahl von Ausnehmungen aufweist. Die Vielzahl von Ausnehmungen kann einreihig oder mehrreihig angeordnet sein. Dabei ist insbesondere bevorzugt, dass die Ausnehmungen auf einer Kreisbahn liegen oder auf zwei, drei oder mehreren im wesentlichen konzentrischen Kreisbahnen liegen. Die Ausnehmungen können auch auf einer ellipsenförmigen Bahn oder auf mehreren ellipsenförmigen Bahnen liegen. Es ist ferner bevorzugt, dass die Ausnehmungen in Umfangsrichtung äquidistant angeordnet sind. Vorzugsweise ist eine der Anzahl von Ausnehmungen entsprechende Anzahl an Zugelementen vorgesehen, wobei vorzugsweise in jeder Ausnehmung ein Zugelement angeordnet ist oder angeordnet werden kann.

Gemäß einem weiteren Aspekt der Erfindung wird die eingangs genannte Aufgabe gelöst durch einen Rotor für eine Windenergieanlage, mit einer Rotornabe und mindestens einem an der Rotornabe befestigten Rotorblatt, wobei das mindestens eine Rotorblatt wie zuvor beschrieben ausgebildet ist.

Gemäß einer bevorzugten Ausführungsform des Rotors ist vorgesehen, dass die Rotornabe einen Flanschabschnitt zum Anschluss des Rotorblatts aufweist und das Rotorblatt mittels mehrerer Zugelemente, die in mehreren Ausnehmungen aufgenommen sind, mit dem Flanschabschnitt verschraubt ist.

Vorzugsweise ist der Flanschabschnitt umlaufend ausgebildet. Ferner ist bevorzugt, dass der Flanschabschnitt im Querschnitt im wesentlichen T-förmig ausgebildet ist.

In einer weiteren bevorzugten Ausführungsform des Rotors ist vorgesehen, dass das Zugelement in der Ausnehmung verklebt ist. Insbesondere ist bevorzugt, dass das Zugelement in der Ausnehmung nicht nur verschraubt, sondern auch verklebt ist.

Hierzu wird vor dem Einbringen des Zugelements in die Ausnehmung ein Klebstoff in die Ausnehmung eingebracht. Als Klebstoff kommen vorzugsweise dünnflüssige Klebstoffe und/oder Klebstoffe auf Epoxid- und/oder Poyurethan- und/oder Methylacrylatbasis zum Einsatz.

Gemäß einem weiteren Aspekt der Erfindung wird die eingangs genannte Aufgabe gelöst durch eine Windenergieanlage, umfassend einen Turm und eine an dem Turm angeordnete Gondel mit einem Rotor, der eine Rotornabe und mindestens ein an der Rotornabe befestigtes Rotorblatt aufweist, wobei das Rotorblatt wie zuvor ausgebildet ist und/oder der Rotor wie zuvor ausgebildet ist.

Gemäß einem weiteren Aspekt der Erfindung wird die eingangs genannte Aufgabe gelöst durch ein Verfahren zur Herstellung eines zuvor beschriebenen Rotorblatts, umfassend Bereitstellen eines Rotorblatts mit einer Anschlussschnittstelle, Erzeugen mindestens einer Ausnehmung in der Anschlussschnittstelle durch Bohren und, vorzugsweise anschließendes, Einbringen eines Innengewindes.

Gemäß einem weiteren Aspekt der Erfindung wird die eingangs genannte Aufgabe gelöst durch ein Verfahren zur Verbindung eines Rotorblatts mit einer Rotornabe, umfassend Bereitstellen eines zuvor beschriebenen Rotorblatts, Einbringen eines Klebstoffs in die Ausnehmung, Befestigen des Rotorblatts an der Rotornabe durch Einschrauben eines Zugelements in die Ausnehmung.

Gemäß einem weiteren Aspekt der Erfindung wird die eingangs genannte Aufgabe gelöst durch ein Verfahren zur Reparatur eines zuvor beschriebenen Rotors einer Windenergieanlage, insbesondere einer Verbindung eines Rotorblatts an einer Rotornabe, umfassend Lösen des Zugelements aus der Ausnehmung, Vergrößern der Ausnehmung auf einen größeren Durchmesser, und Einbringen eines Innengewindes, Befestigen des Rotorblatts an der Rotornabe durch Einschrauben eines Zugelements mit einem größeren Durchmesser in die Ausnehmung.

Das Einbringen eines Innengewindes kann derart erfolgen, dass ein Innengewinde eingebracht wird, das im Vergleich zur vorher bestehenden Verbindung einen kleineren, einen größeren oder einen gleichen Durchmesser hat. Zum Einbringen eines Innengewindes mit größerem oder kleinerem oder gleichem Durchmesser ist es bevorzugt, einen Gewindeeinsatz in die vergrößerte Ausnehmung einzusetzen und/oder einzukleben, wobei der Gewindeeinsatz vorzugsweise aus Metall besteht oder Metall aufweist. Ein Innengewinde mit einem im Vergleich zur vorher bestehenden Verbindung größeren Durchmesser kann auch direkt im Rotorblattmaterial der Anschlussschnittstelle ausgebildet sein, so dass eine Außenumfangsfläche der Ausnehmung von einem Rotorblattmaterial gebildet ist.

Entsprechend dem Durchmesser des Innengewindes wird vorzugsweise ein Zugelement eingeschraubt, das im Vergleich zur vorher bestehenden Verbindung einen kleineren, einen größeren oder einen gleichen Durchmesser hat.

Das Lösen des Zugelements aus der Ausnehmung kann vorzugsweise erfolgen durch Aufbringen eines Losdrehmoments bis zum Versagen der Verklebung, vorzugsweise mittels eines sogenannten "Linksausdreher", und/oder durch Ausbohren.

Vorzugsweise wird das Verfahren zur Reparatur eines zuvor beschriebenen Rotors einer Windenergieanlage ohne Demontage des Rotorblatts durchgeführt. Dies ist insbesondere bevorzugt, wenn die Bohrung des Gegenstücks groß genug ist und/oder auf den größeren Durchmesser vergrößert werden kann. Eine Reparatur und/oder ein Austausch der Zugelemente im zusammengebauten Zustand hat u.a. dem Vorteil, dass eine Demontage des Rotorblatts vermieden werden kann und der damit verbundene Zeit- und Kostenaufwand somit deutlich reduziert werden kann.

Weitere vorteilhafte Ausführungsvarianten der erfindungsgemäßen Vorrichtung ergeben sich durch Kombination der hier erörterten bevorzugten Merkmale.

Zu den Vorteilen, Ausführungsvarianten und Ausführungsdetails dieser weiteren Aspekte der Erfindung und ihrer Fortbildungen wird auf die vorangegangene Beschreibung zu den entsprechenden Vorrichtungsmerkmalen verwiesen.

Bevorzugte Ausführungsformen der Erfindung werden beispielhaft anhand der beiliegenden Figuren beschrieben. Es zeigen:
- Figur 1:: eine schematische Darstellung einer Windenergieanlage mit einem erfindungsgemäßen Rotorblatt;
- Figur 2:: eine schematische Darstellung eines Ausschnitts einer Ausführungsform eines Rotorblatts mit einer Anschlussschnittstelle mit mehreren Ausnehmungen, in die jeweils ein Zugelement eingebracht ist;
- Figur 3:: einen schematischen Längsschnitt durch eine Ausnehmung in einer Anschlussschnittstelle mit eingebrachtem Zugelement;
- Figur 4:: einen schematischen Längsschnitt durch eine Ausnehmung in einer Anschlussschnittstelle; und
- Figur 5:: einen vergrößerten Ausschnitt aus einem Beispiel für ein zusammengesetztes Rotorblatt.

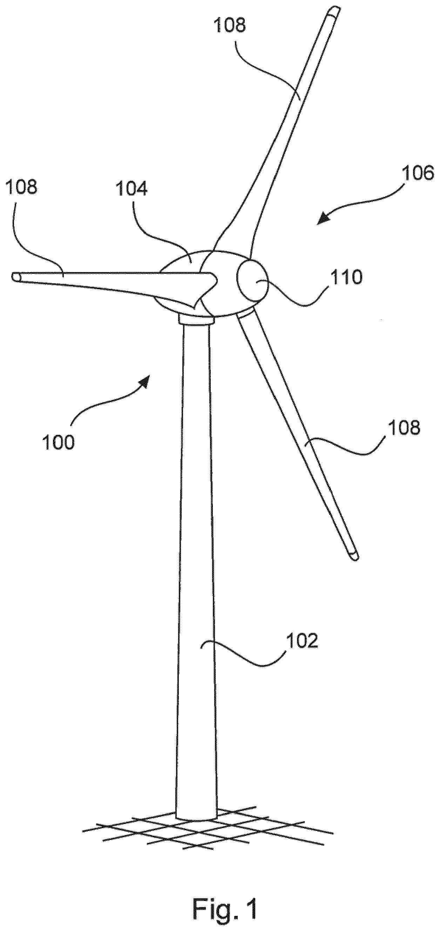

Fig. 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren der jeweiligen Rotorblätter 108 verändert werden. Die Rotorblätter 108 sind mittels der hier beschriebenen Lösung befestigt.

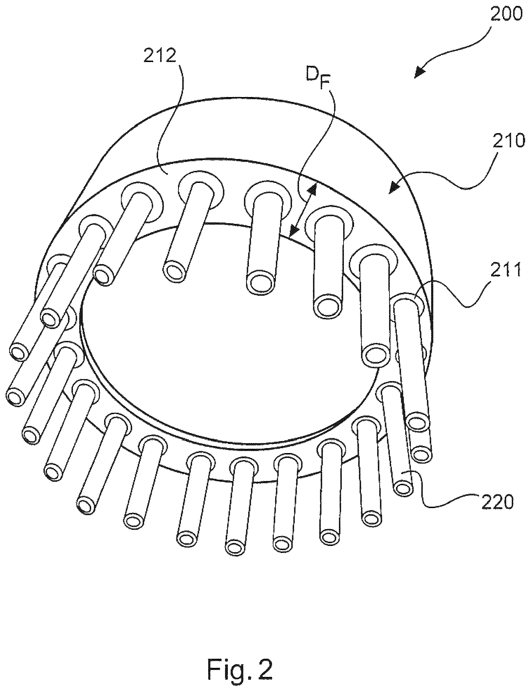

Fig. 2 zeigt eine schematische Darstellung eines Ausschnitts einer Ausführungsform eines Rotorblatts 200 mit einer Anschlussschnittstelle 210 mit mehreren Ausnehmungen 211, in die jeweils ein Zugelement 220 eingebracht ist. Die Außenumfangsfläche der jeweiligen Ausnehmungen 211 ist durch das Anschlussmaterial gebildet. Die Öffnungen der Ausnehmungen 211 liegen in der Stirnfläche 212 der Anschlussschnittstelle 210. Der Durchmesser der Ausnehmung 211 entspricht vorzugsweise etwa einem Drittel, vorzugsweise ca. 10 bis 50%, insbesondere ca. 20 bis 40%, der Ausdehnung D_{F} der Anschlussschnittstelle 210 orthogonal zu einer Längsachse der Ausnehmung 211 und/oder des Rotorblatts 200.

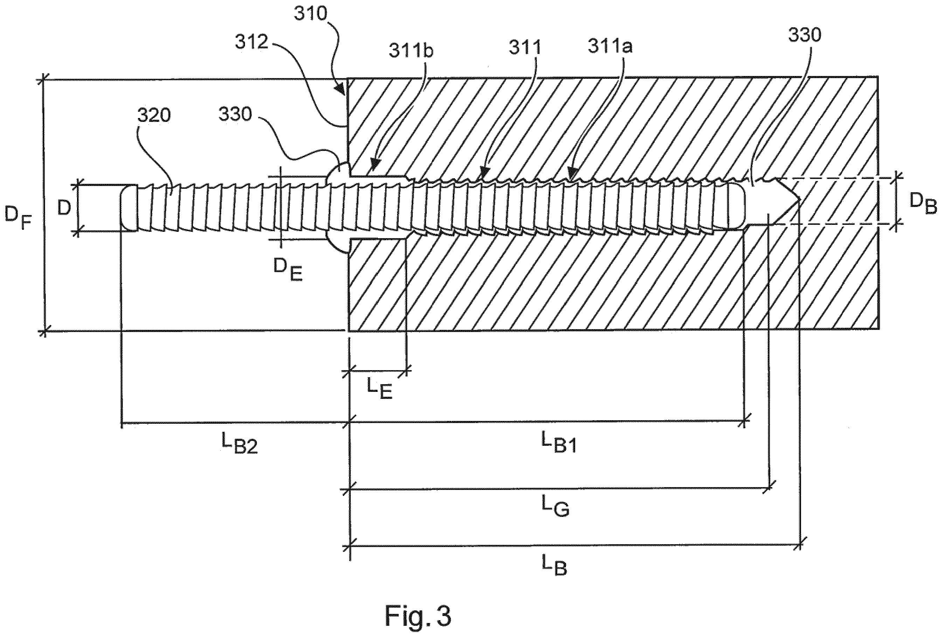

Fig. 3 zeigt eine schematischen Längsschnitt durch eine Ausnehmung 311 in einer Anschlussschnittstelle 310 mit eingebrachtem Zugelement 320 mit einem Durchmesser D und einer Gesamtlänge, die sich aus der Länge L_{B1} des in der Ausnehmung 311 aufgenommenen Teils und der Länge L_{B2} des aus der Ausnehmung 311 herausragenden Teils zusammensetzt. Die Außenumfangsfläche der Ausnehmung 311 ist durch das Anschlussmaterialgebildet. Die Ausnehmung 311 ist als Sackloch ausgebildet, die Öffnung liegt in der Stirnfläche 312 der Anschlussschnittstelle 310. In die Ausnehmung ist Klebstoff 330 eingebracht.

Die Ausnehmung 311 ist im Wesentlichen zylinderförmig ausgebildet und weist einen im Wesentlichen zylinderförmigen Schaftteil 311a mit einem ersten Durchmesser D_{B} auf und einen an die Öffnung angrenzenden erweiterten Kopfteil 311b auf mit einem zweiten Durchmesser D_{E} auf, wobei der zweite Durchmesser D_{E} größer ist als der erste Durchmesser D_{B}. In Längsrichtung der Ausnehmung ist der Schaftteil 311a um ein Vielfaches länger als der Kopfteil 311b mit einer Länge L_{E}. Insgesamt weist die Ausnehmung 311 eine Grundlänge L_{G} und eine Gesamtlänge L_{B} auf. Diese Längserstreckung der Ausnehmung 311 entlang der Längsachse ist länger als die Länge L_{B1} des darin aufzunehmenden Teils des Zugelements 320 und entspricht einem Vielfachen des Durchmessers D_{B} der Ausnehmung 311. Der Durchmesser D_{B} der Ausnehmung 311 entspricht vorzugsweise etwa einem Drittel, vorzugsweise ca. 10 bis 50%, insbesondere ca. 20 bis 40%, der Ausdehnung D_{F} der Anschlussschnittstelle 310 orthogonal zu einer Längsachse der Ausnehmung 311 und/oder des Rotorblatts.

Es können auch Ausführungsformen mit mehrreihigen Verbindungen bevorzugt sein.

Das in der Ausnehmung 311 aufgenommene Zugelement 320 weist ein Außengewinde auf, wobei das Innengewinde der Ausnehmung 311 und das Außengewinde des Zugelements 320 für einen Eingriff miteinander ausgebildet sind.

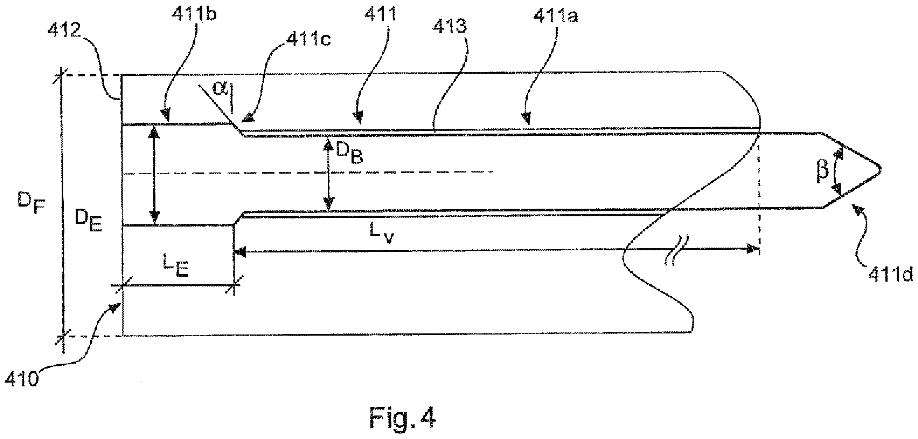

Fig. 4 zeigt einen schematischen Längsschnitt durch eine Ausnehmung 411 in einer Anschlussschnittstelle 410. Die Außenumfangsfläche der Ausnehmung 411 ist durch das Anschlussmaterial gebildet. Die Ausnehmung 411 ist als Sackloch ausgebildet, die Öffnung liegt in der Stirnfläche 412 der Anschlussschnittstelle 410. Die Ausnehmung 411 ist im Wesentlichen zylinderförmig ausgebildet und weist einen im Wesentlichen zylinderförmigen Schaftteil 411a mit einem ersten Durchmesser D_{B} auf und einen an die Öffnung angrenzenden erweiterten Kopfteil 411b auf mit einem zweiten Durchmesser D_{E} auf, wobei der zweite Durchmesser D_{E} größer ist als der erste Durchmesser D_{B}. Zwischen dem erweiterten Kopfteil 411b und dem Schaftteil 411a ist ein Übergangsabschnitt 411c ausgebildet, welcher vorzugsweise einen Neigungswinkel α von 30 bis 60°, insbesondere von 45° aufweist. Am geschlossenen Ende des Sacklochs ist ein Endabschnitt 411d ausgebildet, der vorzugsweise einen Neigungswinkel β von 60 bis 120° aufweist. Der Schaftteil 411a weist ein Innengewinde 413 auf, welches direkt in das Anschlussmaterial geschnitten ist.

In Längsrichtung der Ausnehmung ist der Schaftteil 411a mit einer Länge Lv um ein Vielfaches länger als der Kopfteil 411b mit einer Länge L_{E}. Die Längserstreckung der Ausnehmung 411 entlang der Längsachse entspricht einem Vielfachen des Durchmesser D_{B} der Ausnehmung 311. Der Durchmesser D_{B} der Ausnehmung 311 entspricht vorzugsweise etwa einem Drittel, vorzugsweise ca. 10 bis 50%, insbesondere ca. 20 bis 40%, der Ausdehnung D_{F} der Anschlussschnittstelle 410 orthogonal zu einer Längsachse der Ausnehmung 411 und/oder des Rotorblatts.

Die Anschlussschnittstellen 210, 310, 410 weisen vorzugsweise ein Anschlussmaterial auf, welches identisch ist mit einem Rotorblattmaterial. Ferner vorzugsweise sind die Anschlussschnittstellen 210, 310, 410 jeweils integral mit dem Rotorblatt gefertigt und/oder jeweils einstückig mit dem Rotorblatt ausgebildet.

Vorzugsweise beträgt der Durchmesser D_{E} etwa das 1,25-fache des Durchmessers D_{B}. Ferner vorzugsweise beträgt die Länge D_{E} vorzugsweise etwas as 1,5-fache des Durchmessers D_{B}. Vorzugsweise beträgt die Länge Lv etwa das 6-fache des Durchmesser D_{B}.

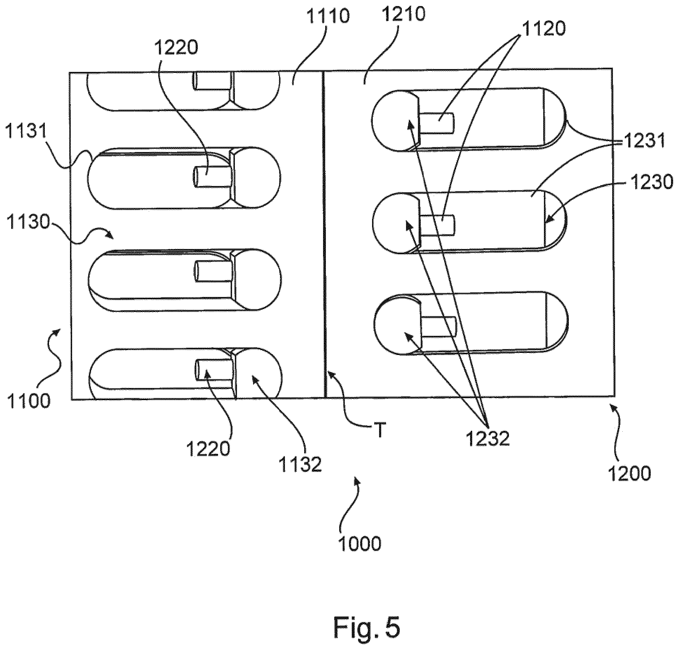

Figur 5 zeigt einen vergrößerten Ausschnitt aus einem Beispiel für ein zusammengesetztes Rotorblatt 1000 mit einem ersten Rotorblattsegment 1100 und einem zweiten Rotorblattsegment 1200. Beide Rotorblattsegmente 1100, 1200 sind wie hierin beschrieben ausgebildet.

Das erste Rotorblattsegment 1100 umfasst eine Anschlussschnittstelle 1110 mit mehreren Zugelementverankerungen 1130, die Öffnungen 1131 umfassen. In den Öffnungen 1131 der Zugelementverankerungen 1130 sind als D-Bolzen ausgebildete Verankerungselemente 1132 angeordnet. Zwischen den Zugelementverankerungen 1130 sind jeweils Ausnehmungen zur Aufnahme von Zugelementen angeordnet. Diese Ausnehmungen sind in Fig. 5 nicht zu erkennen, da es sich nicht um eine Schnittdarstellung handelt. Die Ausnehmungen sind jedoch wie hierin beschrieben ausgebildet und die Außenumfangsfläche der Ausnehmungen ist durch das Anschlussmaterial der Anschlussschnittstelle 1110 gebildet.

Entsprechend ist das zweite Rotorblattsegment 1200 aufgebaut. Das zweite Rotorblattsegment 1200 umfasst eine Anschlussschnittstelle 1210 mit mehreren Zugelementverankerungen 1230, die Öffnungen 1231 umfassen. In den Öffnungen 1231 der Zugelementverankerungen 1230 sind als D-Bolzen ausgebildete Verankerungselemente 1232 angeordnet. Zwischen den Zugelementverankerungen 1230 sind jeweils Ausnehmungen zur Aufnahme von Zugelementen angeordnet. Diese Ausnehmungen sind in Fig. 5 nicht zu erkennen, da es sich nicht um eine Schnittdarstellung handelt. Die Ausnehmungen sind jedoch wie hierin beschrieben ausgebildet und die Außenumfangsfläche der Ausnehmungen ist durch das Anschlussmaterial der Anschlussschnittstelle 1200 gebildet.

Die beiden Stirnflächen der Anschlussschnittstellen 1110, 1210 treffen an der Trennstelle T aufeinander.

In den Ausnehmungen des ersten Rotorblattsegments 1100 sind Zugelemente 1120 eingebracht, die in den Zugelementverankerungen 1230 des zweiten Rotorblattsegment 1200 verankert sind. In den Ausnehmungen des zweiten Rotorblattsegments 1200 sind Zugelemente 1220 eingebracht, die in den Zugelementverankerungen 1130 des ersten Rotorblattsegment 1100 verankert sind. Die Einbringung und Verankerung von Zugelementen des ersten und zweiten Rotorblattsegments 1100, 1200 erfolgt hier somit alternierend, wobei jedoch auch andere Anordnungen möglich sind.

Diese Verbindung von Rotorblattsegmenten eines zusammengesetzten Rotorblatts hat eine hohe Gewichts- und Platzersparnis und ermöglicht z.B. die Anordnung einer Vielzahl von Zugelementen auf engem Raum. Entsprechende Verbindungen sind nicht nur zwischen Rotorblattsegmenten möglich, sondern auch grundsätzlich zwischen einem Rotorblatts und einem weiteren Element einer Windenergieanlage, wie beispielsweise einer Rotorblattnabe und/oder einem Rotorblattadapter.

## Patentansprüche

1. Rotorblatt für eine Windenergieanlage,
mit einer Anschlussschnittstelle,
wobei die Anschlussschnittstelle mindestens eine Ausnehmung (311) aufweist zur Aufnahme eines Zugelements (320) zum Anschluss des Rotorblatts (108) an ein weiteres Element (110) einer Windenergieanlage,
**dadurch gekennzeichnet, dass** eine Außenumfangsfläche der Ausnehmung (311) von einem Anschlussmaterial gebildet ist und ein Innengewinde (311a) aufweist,
wobei das Zugelement mit Klebstoff (330) in die Ausnehmung (311) eingebracht ist

2. Rotorblatt nach dem vorhergehenden Anspruch,
**dadurch gekennzeichnet, dass** die Ausnehmung als Sackloch ausgebildet ist,
und/oder
**dadurch gekennzeichnet, dass** die Ausnehmung erhalten ist durch Bohren und Einbringen eines Innengewindes.

3. Rotorblatt nach mindestens einem der vorhergehenden Ansprüche, **dadurch gekennzeichnet, dass** die Ausnehmung eine Tiefe aufweist, die einem mindestens einem Vielfachen des Durchmessers der Ausnehmung entspricht.

4. Rotorblatt nach mindestens einem der vorhergehenden Ansprüche, **dadurch gekennzeichnet, dass** die Ausnehmung eine Tiefe aufweist, die mindestens dem Dreifachen, vorzugsweise mindestens dem Sechsfachen, insbesondere maximal dem Zwölffachen des Durchmessers der Ausnehmung entspricht.

5. Rotorblatt nach mindestens einem der vorhergehenden Ansprüche, **dadurch gekennzeichnet, dass** das Rotorblattmaterial und/oder das Anschlussmaterial ein faserverstärktes Verbundmaterial ist, insbesondere Faser-Kunststoff-Verbundmaterial, vorzugsweise ein glasfaserverstärktes Epoxidharz-Verbundmaterial.

6. Rotorblatt nach mindestens einem der vorhergehenden Ansprüche,
**dadurch gekennzeichnet, dass** das Rotorblattmaterial und/oder das Anschlussmaterial eine Steifigkeit aufweist, die geringer ist als die Steifigkeit eines Materials des Zugelements, wobei als Maß der Steifigkeit insbesondere der Elastizitätsmodul und/oder der Schubmodul des jeweiligen Materials dient.

7. Rotorblatt nach mindestens einem der vorhergehenden Ansprüche,
**dadurch gekennzeichnet, dass** das Rotorblattmaterial und/oder das Anschlussmaterial eine Steifigkeit aufweist, die um ein Vielfaches geringer ist, vorzugsweise um mindestens das Fünffache geringer ist, beispielsweise um mindestens das Siebenfache geringer ist, als die Steifigkeit eines Materials des Zugelements, wobei als Maß der Steifigkeit insbesondere der Elastizitätsmodul und/oder der Schubmodul des jeweiligen Materials dient.

8. Rotorblatt nach mindestens einem der vorhergehenden Ansprüche,
**dadurch gekennzeichnet, dass** die Anschlussschnittstelle eine Vielzahl von Ausnehmungen aufweist.

9. Zusammengesetztes Rotorblatt,
umfassend ein erstes Rotorblattsegment (1100), welches als Rotorblatt nach mindestens einem der vorhergehenden Ansprüche ausgebildet ist, und ein zweites Rotorblattsegment (1200), welches als Rotorblatt nach mindestens einem der vorhergehenden Ansprüche ausgebildet ist,
wobei ein erstes Zugelement (1120) in der Ausnehmung des ersten Rotorblattsegments aufgenommen und in der Zugverankerung des zweiten Rotorblattsegments verankert ist, und
wobei ein zweites Zugelement (1220) in der Ausnehmung des zweiten Rotorblattsegments aufgenommen und in der Zugverankerung des ersten Rotorblattsegments verankert ist.

10. Rotor für eine Windenergieanlage,
mit einer Rotornabe und mindestens einem an der Rotornabe befestigten Rotorblatt,
wobei das mindestens eine Rotorblatt nach mindestens einem der vorstehenden Ansprüche ausgebildet ist,
**dadurch gekennzeichnet, dass** das Zugelement in der Ausnehmung verklebt ist.

11. Windenergieanlage,
umfassend einen Turm und eine an dem Turm angeordnete Gondel mit einem Rotor, der eine Rotornabe und mindestens ein an der Rotornabe befestigtes Rotorblatt aufweist, wobei das Rotorblatt nach mindestens einem der Ansprüche 1 bis 8 ausgebildet ist und/oder der Rotor nach Anspruch 10 ausgebildet ist

12. Verfahren zur Herstellung eines Rotorblatts nach mindestens einem der Ansprüche 1 bis 8, umfassend:
- Bereitstellen eines Rotorblatts mit einer Anschlussschnittstelle,
- Erzeugen mindestens einer Ausnehmung in der Anschlussschnittstelle durch Bohren und Einbringen eines Innengewindes,
- Einbringen eines Zugelements mit Klebstoff in die Ausnehmung.

13. Verfahren zur Verbindung eines Rotorblatts mit einer Rotornabe, umfassend:
- Bereitstellen eines Rotorblatts nach mindestens einem der Ansprüche 1 bis 8,
- Einbringen eines Klebstoffs in die Ausnehmung,
- Befestigen des Rotorblatts an der Rotornabe durch Einschrauben eines Zugelements in die Ausnehmung.

14. Verfahren zur Reparatur eines Rotors einer Windenergieanlage nach Anspruch 10, insbesondere einer Verbindung eines Rotorblatts an einer Rotornabe, umfassend:
- Lösen des Zugelements aus der Ausnehmung,
- Vergrößern der Ausnehmung auf einen größeren Durchmesser und Einbringen eines Innengewindes,
- Befestigen des Rotorblatts an der Rotornabe durch Einschrauben eines Zugelements in die Ausnehmung.

## Claims

1. A rotor blade for a wind turbine,
having a connection interface,
the connection interface having at least one cutout (311) for receiving a tension element (320) for connecting the rotor blade (108) to a further element (110) of a wind turbine,
**characterized in that** an outer circumferential surface of the cutout is formed of a connection material and has an internal thread (311a),
wherein the tension element is introduced into the cutout (311) with adhesive material (330).

2. The rotor blade as claimed in the preceding claim,
**characterized in that** the cutout is configured in the form of a blind hole, and/or
**characterized in that** the cutout is obtained by drilling and introducing an internal thread.

3. The rotor blade as claimed in at least one of the preceding claims, **characterized in that** the cutout has a depth which corresponds to at least a multiple of the diameter of the cutout.

4. The rotor blade as claimed in at least one of the preceding claims, **characterized in that** the cutout has a depth which corresponds to at least three times, preferably at least six times, in particular at most twelve times the diameter of the cutout.

5. The rotor blade as claimed in at least one of the preceding claims, **characterized in that** the rotor blade material and/or the connection material are/is a fiber-reinforced composite material, in particular a fiber-plastic composite material, preferably a glass-fiber-reinforced epoxy resin composite material.

6. The rotor blade as claimed in at least one of the preceding claims, **characterized in that** the rotor blade material and/or the connection material have/has a stiffness which is lower than the stiffness of a material of the tension element, with the elastic modulus and/or the shear modulus of the respective material, in particular, being used as a measure of the stiffness.

7. The rotor blade as claimed in at least one of the preceding claims, **characterized in that** the rotor blade material and/or the connection material have/has a stiffness which is many times lower, preferably is at least five times lower, for example is at least seven times lower, than the stiffness of a material of the tension element, with the elastic modulus and/or the shear modulus of the respective material, in particular, being used as a measure of the stiffness.

8. The rotor blade as claimed in at least one of the preceding claims, **characterized in that** the connection interface has a plurality of cutouts.

9. An assembled rotor blade,
comprising a first rotor blade segment (1100), which is configured in the form of a rotor blade as claimed in at least one of the preceding claims, and
a second rotor blade segment (1200), which is configured in the form of a rotor blade as claimed in at least one of the preceding claims,
a first tension element (1120) being received in the cutout of the first rotor blade segment and being anchored in the tension anchor of the second rotor blade segment, and
a second tension element (1220) being received in the cutout of the second rotor blade segment and being anchored in the tension anchor of the first rotor blade segment.

10. A rotor for a wind turbine,
having a rotor hub and at least one rotor blade which is fastened to the rotor hub,
the at least one rotor blade being configured as claimed in at least one of the preceding claims**characterized in that** the tension element is adhesively bonded in the cutout.

11. A wind turbine,
comprising a tower and a nacelle which is arranged on the tower and which has a rotor, which rotor has a rotor hub and at least one rotor blade which is fastened to the rotor hub, the rotor blade being configured as claimed in at least one of the claims 1-8 and/or the rotor being configured as claimed in claim 10.

12. A method for producing a rotor blade as claimed in at least one of the claims 1-8,
comprising:
- providing a rotor blade having a connection interface,
- producing at least one cutout in the connection interface by drilling and introducing an internal thread,
- introducing a tension element into the cutout with adhesive material.

13. A method for connecting a rotor blade to a rotor hub,
comprising:
- providing a rotor blade as claimed in at least one of the claims 1-8,
- introducing an adhesive material into the cutout,
- fastening the rotor blade to the rotor hub by screwing a tension element into the cutout.

14. A method for repairing a rotor of a wind turbine as claimed in claim 10, in particular repairing a connection of a rotor blade to a rotor hub,
comprising:
- releasing the tension element from the cutout,
- enlarging the cutout to a larger diameter and introducing an internal thread,
- fastening the rotor blade to the rotor hub by screwing a tension element into the cutout.

## Revendications

1. Pale de rotor pour une éolienne,
avec une interface de raccordement,
dans laquelle l'interface de raccordement présente au moins un évidement (311) pour loger un élément de traction (320) pour raccorder la pale de rotor (108) à un autre élément (110) d'une éolienne,
**caractérisée en ce qu'**une surface périphérique extérieure de l'évidement (311) est formée par un matériau de raccordement et présente un filetage intérieur (311a),
dans laquelle l'élément de traction est introduit avec de la colle (330) dans l'évidement (311).

2. Pale de rotor selon la revendication précédente,
**caractérisée en ce que** l'évidement est réalisé en tant que trou borgne,
et/ou
**caractérisée en ce que** l'évidement est obtenu par perçage et réalisation d'un filetage intérieur.

3. Pale de rotor selon au moins l'une quelconque des revendications précédentes,
**caractérisée en ce que** l'évidement présente une profondeur qui correspond à au moins un multiple du diamètre de l'évidement.

4. Pale de rotor selon au moins l'une quelconque des revendications précédentes,
**caractérisée en ce que** l'évidement présente une profondeur qui correspond au moins à trois fois, de préférence au moins à six fois, en particulier au maximum à douze fois, le diamètre de l'évidement.

5. Pale de rotor selon au moins l'une quelconque des revendications précédentes,
**caractérisée en ce que** le matériau de pale de rotor et/ou le matériau de raccordement sont un matériau composite renforcé par des fibres, en particulier un matériau composite à base de fibres et de matière plastique, de préférence un matériau composite à base de résine époxy renforcé par des fibres de verre.

6. Pale de rotor selon au moins l'une quelconque des revendications précédentes,
**caractérisée en ce que** le matériau de pale de rotor et/ou le matériau de raccordement présentent une rigidité qui est inférieure à la rigidité d'un matériau de l'élément de traction, dans laquelle en particulier le module d'élasticité et/ou le module de cisaillement du matériau respectif font office de mesure de la rigidité.

7. Pale de rotor selon au moins l'une quelconque des revendications précédentes,
**caractérisée en ce que** le matériau de pale de rotor et/ou le matériau de raccordement présentent une rigidité qui est inférieure d'un multiple, de préférence est inférieure d'au moins cinq fois, par exemple est inférieure d'au moins sept fois, à la rigidité d'un matériau de l'élément de traction, dans laquelle en particulier le module d'élasticité et/ou le module de cisaillement du matériau respectif font office de mesure de la rigidité.

8. Pale de rotor selon au moins l'une quelconque des revendications précédentes,
**caractérisée en ce que** l'interface de raccordement présente une pluralité d'évidements.

9. Pale de rotor composée,
comprenant un premier segment de pale de rotor (1100), lequel est réalisé en tant que pale de rotor selon au moins l'une quelconque des revendications précédentes, et
un deuxième segment de pale de rotor (1200), lequel est réalisé en tant que pale de rotor selon au moins l'une quelconque des revendications précédentes,
dans laquelle un premier élément de traction (1120) est logé dans l'évidement du premier segment de pale de rotor et est ancré dans l'ancrage de traction du deuxième segment de pale de rotor, et
dans lequel un deuxième élément de traction (1220) est logé dans l'évidement du deuxième segment de pale de rotor et est ancré dans l'ancrage de traction du premier segment de pale de rotor.

10. Rotor pour une éolienne,
avec un moyeu de rotor et au moins une pale de rotor fixée sur le moyeu de rotor,
dans lequel l'au moins une pale de rotor est réalisée selon au moins l'une quelconque des revendications précédentes,
**caractérisé en ce que** l'élément de traction est collé dans l'évidement.

11. Eolienne
comprenant une tour et une nacelle disposée sur la tour avec un rotor, qui présente un moyeu de rotor et au moins une pale de rotor fixée sur le moyeu de rotor, dans laquelle la pale de rotor est réalisée selon au moins l'une quelconque des revendications 1 à 8 et/ou le rotor est réalisé selon la revendication 10.

12. Procédé de fabrication d'une pale de rotor selon au moins l'une quelconque des revendications 1 à 8,
comprenant :
- la fourniture d'une pale de rotor avec une interface de raccordement,
- la production d'au moins un évidement dans l'interface de raccordement par perçage et réalisation d'un filetage intérieur,
- l'introduction d'un élément de traction avec de la colle dans l'évidement.

13. Procédé de liaison d'une pale de rotor à un moyeu de rotor,
comprenant :
- la fourniture d'une pale de rotor selon au moins l'une quelconque des revendications 1 à 8,
- l'introduction d'une colle dans l'évidement,
- la fixation de la pale de rotor sur le moyeu de rotor par vissage d'un élément de traction dans l'évidement.

14. Procédé de réparation d'un rotor d'une éolienne selon la revendication 10, en particulier d'une liaison d'une pale de rotor à un moyeu de rotor,
comprenant :
- le détachement de l'élément de traction hors de l'évidement,
- l'agrandissement de l'évidement sur un diamètre plus grand et la réalisation d'un filetage intérieur,
- la fixation de la pale de rotor sur le moyeu de rotor par vissage d'un élément de traction dans l'évidement.
